# EUROPÄISCHE PATENTSCHRIFT

(11) **EP 2 263 438 B1**
(45) Veröffentlichungstag und Bekanntmachung des Hinweises auf die Patenterteilung: **12.06.2013**
(21) Anmeldenummer: 10165070.3
(22) Anmeldetag: 07.06.2010
(51) Int. Cl.: A01D 34/66, A01D 75/30

(54) **Sichelmähwerk für einen Kontur-Sichelmäher**
Sickle mower for a contour lawn mower
Outil de tonte à faucille pour une tondeuse à contour

(30) Priorität: 17.06.2009 DE 102009025676
(43) Veröffentlichungstag der Anmeldung: 22.12.2010
(73) Patentinhaber: Schell GmbH, 52076 Aachen (DE)
(72) Erfinder: Schell, Franz-Josef, 52076, Aachen (DE); Schell, Oliver, 52076, Aachen (DE)
(74) Vertreter: Kohlmann, Kai

(56) Entgegenhaltungen:
- AU-B2- 478 398
- US-A1- 2002 157 362
- US-A1- 2004 148 917
- US-A1- 2007 084 173
- US-B1- 6 481 191

## Beschreibung

Die Erfindung betrifft ein Sichelmähwerk für einen Kontur-Sichelmäher mit mehreren beweglich aufgehängten Schneideinheiten, wobei das Sichelmähwerk eine Rahmenkonstruktion mit mehreren Rahmenteilen aufweist und die Rahmenteile über Schwenkachsen gelenkig miteinander verbunden sind.

Kontur-Sichelmäher bestehen üblicherweise aus einem insbesondere Allrad-getriebenen Geräteträger sowie einem an dem Geräteträger befestigten Sichelmähwerk mit mehreren Schneideinheiten. Die Sichelmähwerke nach dem Stand der Technik ermöglichen Mähbreiten von maximal etwa 5 Metern bei Mähhöhen zwischen 20 bis 80 Millimetern. Bei einem bekannten Kontur-Sichelmäher sind zur Anpassung an modelliertes Gelände an mehreren Tragarmen Schneideinheiten kardanisch aufgehängt, wobei jede Aufhängung jeweils zwei um 90 Grad gegeneinander versetzte Achsen aufweist. Hierdurch können sich die Schneideinheiten nach allen Richtungen bewegen und sich in gewissem Umfang an die jeweilige Geländetopographie anpassen. Bei starken Verwerfungen des Geländes, wie sie insbesondere auf Golfplätzen anzutreffen sind, reicht jedoch die kardanische Aufhängung der einzelnen Schneideinheiten unter Umständen nicht aus, um eine optimale Bodenanpassung sicherzustellen.

Aus der US 2002 0 157 362 A1 ist ein Sichelmähwerk für einen Sichelmäher mit drei beweglich aufgehängten Schneideinheiten bekannt, wobei das Sichelmähwerk eine Rahmenkonstruktion mit mehreren Rahmenteilen aufweist. Das erste Rahmenteil wird von zwei parallel zur Längsachse des Sichelmähers verlaufenden Längsträgern gebildet, die über eine Querstrebe endseitig miteinander verbunden sind. Die Querstrebe ragt seitlich über die Längsträger hinaus. An der Querstrebe sind drei Gelenke angeordnet, wobei das mittlere Gelenk sich zwischen den beiden Längsträgern und die beiden äußeren Gelenke sich an den überstehenden Abschnitten befinden. Über jedes der drei Gelenke ist das erste Rahmenteil mit jeweils einem weiteren Rahmenteil in Form eines Bügels gelenkig verbunden, wobei die Schwenkachsen der Gelenke quer zur Längsachse des Sichelmähers verlaufen und damit quer zu dessen Fahrtrichtung. Die drei Bügel sind an Gehäuseflanschen der Schneideinheiten angelenkt, so dass jede Schneideinheit um eine Schwenkachse drehbar ist. Die Schwenkachsen der Schneideinheiten verlaufen ebenfalls quer zur Längsachse des Sichelmähers. Durch die gelenkige Verbindung der Schneideinheiten mit dem Rahmen des Sichelmähwerks soll das Schneiden von Gras auch in unebenem Gelände verbessert werden.

Die EP 1 245 141 A1 offenbart ein Sichelmähwerk mit drei schwenkbar miteinander verbundenen Schneideinheiten. Die schwenkbare Verbindung erfolgt dadurch, dass die erste Schneideinheit und die dritte Schneideinheit schwenkbar an der mittleren Schneideinheit angebracht sind. Die erste und dritte Schneideinheit schwenken um die mittlere Schneideinheit und können daher der Kontur einer unebenen Bodenoberfläche folgen. Um die Schwenkbewegung zu ermöglichen, ist an der ersten und dritten Schneideinheit jeweils eine Schwenkplatte mit einem Führungsschlitz angeschweißt. An der mittleren Schneideinheit ist ein Paar von Stiften starr befestigt, die in die Führungsschlitze der ersten und dritten Schneideinheit eingreifen und damit die Schwenkbewegung der beiden äußeren Schneideinheiten begrenzen.

Die AU 478 398 B2 offenbart ein Spindelmähwerk mit mehreren beweglich aufgehängten Schneideinheiten, wobei das Spindelmähwerk eine Rahmenkonstruktion mit mehreren rechteckigen Rahmenteilen aufweist, die in Verlängerung ihrer in Fahrtrichtung vorderen und hinteren Querholme über Verbinder gekoppelt sind. Die Rahmenteile sind dazu bestimmt, jeweils eine Schneideinheit aufzunehmen. An dem in Fahrtrichtung hinteren Verbinder zwischen jeweils zwei Rahmenteilen ist ein dreieckförmiger Zugrahmen angelenkt, an dem jeweils ein weiteres rechteckiges Rahmenteil zur Aufnahme einer Schneideinheit angeordnet ist. Jede Schneideinheit ist an dem rechteckigen Rahmenteil um eine Schwenkachse drehbar gelagert ist, die zugleich zur Aufnahme eines Stützrades dient. An der in Fahrtrichtung des Spindelmähwerks hinteren Seite der Schneideinheit ist eine sich im Wesentlichen über dessen gesamte Breite erstreckende Stützrolle angeordnet. Zwischen der rückwärtigen Stützrolle und dem in Fahrtrichtung vorderen Stützrad ist das Spindelmesser der Schneideinheit drehbar zwischen zwei Stehblechen gelagert.

Die US 2004/148917 A1 offenbart ein Sichelmähwerk für einen Kontur-Sichelmäher mit mehreren beweglich aufgehängten Schneideinheiten, wobei das Sichelmähwerk eine Rahmenkonstruktion mit einem quer zur Fahrtrichtung des Sichelmähers verlaufenden Hauptrahmen aufweist, an dem in Fahrtrichtung verlaufende Hilfsrahmen zur Aufnahme der Schneideinheiten angeordnet sind. Zur Einstellung der Schnitttiefe ist an jeder Schneideinheit in Fahrtrichtung des Sichelmähwerks vor deren Einhausung eine schwenkbare Stützrolle und an der gegenüberliegenden Seite eine längliche Rolle angeordnet.

Ausgehend von diesem Stand der Technik liegt der Erfindung daher die Aufgabe zu Grunde, ein Sichelmähwerk für einen Kontur-Sichelmäher zu schaffen, das auch unter schwierigen topographischen Verhältnissen, insbesondere auf Golfplätzen eine gute Bodenanpassung und Schnittoptik bei hoher Mähleistung gewährleistet und das definierte Schnittbedingungen, insbesondere gleich bleibende geringe Mähhöhen auch unter schwierigen Bodenbedingungen erzielt.

Diese Aufgabe wird bei einem Sichelmähwerk der eingangs erwähnten Art dadurch gelöst, dass die Schwenkachsen zwischen benachbarten Rahmenteilen, aus denen sich die Rahmenkonstruktion gliederartig zusammensetzt, parallel zur Längsachse des Kontur-Sichelmähers verlaufen und damit parallel zu dessen Fahrtrichtung bei Geradeausfahrt, an sämtlichen Rahmenteilen jeweils mindestens eine Schneideinheit um eine Schwenkachse drehbar angeordnet ist und die Schwenkachsen zwischen den Rahmenteilen einerseits und die Schwenkachsen der Schneideinheiten andererseits versetzt zueinander angeordnet sind und dass die Lagerung jeder Schneideinheit derart an der Einhausung angeordnet ist, dass ein größerer Teil des Eigengewichts der Schneideinheit in Fahrtrichtung des Sichelmähwerks vor der Schwenkachse der Schneideinheit liegt.

Die mehrteilige Rahmenkonstruktion mit gelenkig untereinander nach Art einer Gliederkette verbundenen Rahmenteilen, an denen wiederum gelenkig die Schneideinheiten angeordnet sind, sorgt für eine optimale Anpassung des Sichelmähwerks an die jeweilige Geländetopographie. Die für Golfplätze geforderten geringen Schnitthöhen von etwa 14 mm werden ohne Einschnitt in die Grasnabe ermöglicht. Die Schwenkachsen zwischen benachbarten Rahmenteilen verlaufen parallel zur Längsachse des Kontur-Sichelmähers und damit parallel zu dessen Fahrtrichtung bei Geradeausfahrt. Hierdurch passt sich die gliederartige Rahmenkonstruktion auch großformatigen wellenförmigen Verwerfungen in der Geländetopographie hervorragend an. Geländeverwerfungen in Fahrtrichtung werden dadurch ausgeglichen, dass jede Schneideinheit an den Rahmenteilen um eine Schwenkachse drehbar angeordnet ist, die windschief zu den Schwenkachsen zwischen den Rahmenteilen verläuft, insbesondere um 90 Grad versetzt zu den Schwenkachsen zwischen den Rahmenteilen verläuft.

Um unter sämtlichen Betriebsbedingungen einen ausreichenden Schwenkwinkel der Schneideinheiten zu gewährleisten, ist in vorteilhafter Ausgestaltung der Erfindung vorgesehen, dass jede Schneideinheit an zwei sich von dem Rahmenteil in Gebrauchsstellung des Sichelmähwerks nach unten erstreckenden Aufnahmen schwenkbar gelagert ist.

Zur Erzielung definierter Schnittbedingungen, insbesondere gleich bleibender geringer Mähhöhen auch unter schwierigen Bodenbedingungen wird erfindungsgemäß vorgeschlagen, dass die Lagerung jeder Schneideinheit derart an der Einhausung angeordnet ist, dass ein größerer Teil des Eigengewichts der Schneideinheit in Fahrtrichtung des Sichelmähwerks vor der Schwenkachse der Schneideinheit liegt. Die Hauptlast jeder Schneideinheit wird dann von einer in Fahrtrichtung vorne an der Einhausung der Schneideinheit angeordneten schwenkbaren Stützrolle abgetragen, die zudem vorzugsweise höhenverstellbar ist, um die Mähhöhe bedarfsweise anzupassen. An der gegenüberliegenden Seite der Einhausung ist eine sich vorzugsweise über die gesamte Breite der Einhausung erstreckende Stützwalze angeordnet, die ein Einschneiden des in der Einhausung rotierenden Schneidmessers in die Grasnabe wirksam verhindert.

Um auch bei schwierigen Geländetopographien den Rasen auf der gesamten Breite des Sichelmähwerks in einem Arbeitsgang, das heißt mit einer Fahrt des Sichelmähers in einer Richtung, gleichmäßig zu schneiden, sind in vorteilhafter Ausgestaltung der Erfindung an den Rahmenteilen der Rahmenkonstruktion Schneideinheiten in mindestens zwei quer zur Fahrtrichtung des Sichelmähers im Abstand zueinander verlaufenden Reihen angeordnet, wobei die Schneideinheiten in den unterschiedlichen Reihen derart versetzt zueinander angeordnet sind, dass sich die Schneidstreifen der einzelnen Schneideinheiten überlappen.

Wenn zumindest die inneren Rahmenteile als Viereckrahmen mit vorderen und hinteren Holmen sowie seitlichen Längsholmen ausgestaltet sind, lassen sich die Schneideinheiten einfach in zwei Reihen versetzt zueinander abwechselnd an den vorderen und hinteren Holmen schwenkbar anordnen. Über die Länge der Längsholme wird der ausreichende Abstand zwischen den versetzt zueinander angeordneten Schneideinheiten sichergestellt.

Das erfindungsgemäße Sichelmähwerk ist vorzugsweise an hydraulisch gekoppelten Haltearmen an der Vorderseite des Geräteträgers befestigt. Die Gelenkverbindung der Rahmenkonstruktion zu den Haltearmen des Geräteträgers ist derart ausgebildet, dass die Abstandsänderung und Winkeländerung zwischen den Rahmenteilen der Rahmenkonstruktion, an denen die Haltearme ansetzen, in gewissem Umfang toleriert werden. Zu diesen Änderungen kommt es in Folge der Anpassung der Rahmenkonstruktion an unterschiedliche Geländetopographien während des Schneidvorgangs.

Ein erfindungsgemäßer Kontur-Sichelmäher weist beispielsweise neun Schneideinheiten mit relativ geringer Breite auf, von denen vier Schneideinheiten an den vorderen Holmen und fünf Schneideinheiten an den hinteren Holmen der Rahmenteile schwenkbar angeordnet sind. Aufgrund der Vielzahl der Schneideinheiten mit relativ geringer Breite kann eine besonders gleichmäßige, geringe Schnitthöhe von etwa 14 mm erreicht werden. Die Verwendung von Sichelmessern bewirkt eine vollständige Zerkleinerung des Schnittgutes.

Um die gesamte Schnittbreite des Kontur-Sichelmähers zu erhöhen, können an dem Geräteträger weitere erfindungsgemäße Sichelmähwerke angeordnet sein. Vorzugsweise sind die nach Art einer Kette, gliederartig miteinander verbundenen Rahmenteile jedes weiteren Sichelmähwerks an den Längsseiten des Geräteträgers, d.h. in Fahrtrichtung links und rechts angeordnet. Die Anzahl der gelenkig miteinander verbundenen Rahmenteile der seitlichen Sichelmähwerke ist vorzugsweise geringer als die Anzahl der Sichelmähwerke des frontseitig an den Haltearmen angeordneten Sichelmähwerks. Das seitliche Sichelmähwerk umfasst beispielsweise drei Rahmenteile, wobei am mittleren Rahmenteil eine Schneideinheit an dem vorderen Holm angelenkt ist und an den benachbarten Rahmenteilen zwei weitere Schneideinheiten gelenkig an den in Fahrtrichtung hinteren Holmen angelenkt sind. Die Befestigung an dem Geräteträger erfolgt beispielsweise mittels eines seitlichen Auslegers des Geräteträgers, der über mit dem mittleren Rahmenteil um eine in Fahrtrichtung verlaufende Schwenkachse gelenkig verbunden ist.

Nachfolgend wird die Erfindung anhand der Figuren näher erläutert. Es zeigen:
- **Figur 1**: eine perspektivische Ansicht eines erfindungsgemäßen Sichelmähwerks beim Schneiden des Rasens auf einem Hügels,
- **Figur 2**: das Sichelmähwerk nach Figur 1 in Fahrtrichtung von der Rückseite betrachtet,
- **Figur 3**: eine Detaildarstellung einer einzelnen Schneideinheit,
- **Figur 4**: eine Vorderansicht des Sichelmähwerks beim Schneiden des Rasens in einer großflächigen Mulde,
- **Figur 5**: eine Frontalansicht eines Kontur-Sichelmähers mit einem erfindungsgemäßen Sichelmähwerk.

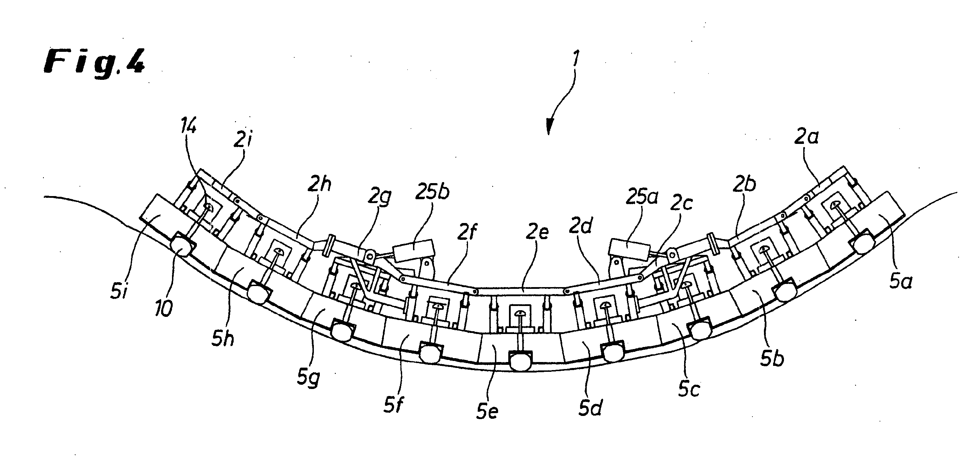

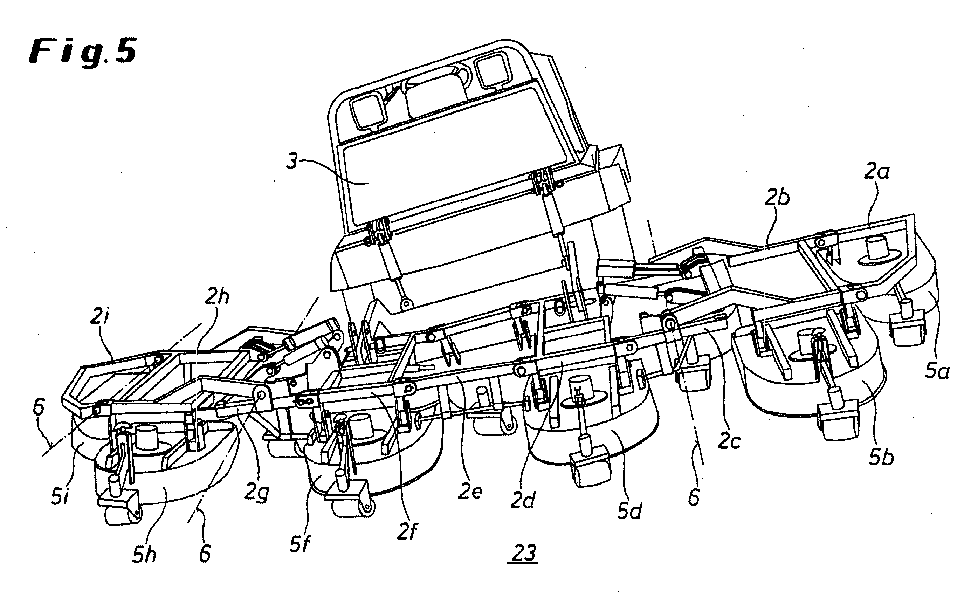

Das erfindungsgemäße Sichelmähwerk (1) besteht im Wesentlichen aus einer Rahmenkonstruktion mit insgesamt neun Rahmenteilen (2 a - i), die insbesondere aus Figur 4 sowie Figur 5 erkennbar sind. Benachbarte Rahmenteile (2 a - i) sind jeweils über Schwenkachsen (6) gelenkig miteinander verbunden. An jedem Rahmenteil (2 a - i) ist an zwei sich von dem Rahmenteil in Gebrauchstellung des Sichelmähwerks (1) nach unten erstreckenden Aufnahmen (4 a, b) eine Schneideinheit (5 a - i) schwenkbar gelagert. Die Schwenkachsen (6) zwischen den Rahmenteilen (2 a - i) verlaufen um 90 Grad versetzt zu den Schwenkachsen (7) der Schneideinheiten (5 a - i), die durch die Aufnahmen (4 a, b) an jedem Rahmenteil (2 a - i) festgelegt werden.

An jeder Schneideinheit (5 a - i) ist in Fahrtrichtung (8) des an dem Geräteträger (3) angeordneten Sichelmähwerks (1) vor deren Einhausung (9) eine schwenkbare Stützrolle (10) angeordnet. Die die Stützrolle (10) aufnehmende Gabel (11) ist an einem Arm (12) um eine vertikale Achse (13) frei drehbar gelagert. Am gegenüberliegenden Ende des Arms (12) ist dieser in einer Höhenverstellung (14), die an der Einhausung (9) ansetzt, geführt.

An der gegenüberliegenden, in Fahrtrichtung (8) hinteren Seite jeder Schneideinheit (5 a - i) ist eine sich über die gesamte Breite der Einhausung (9) erstreckende Stützwalze (15) zwischen zwei Seitenwangen (16) mit einer Kulissenführung (17) zur Höhenverstellung gelagert.

Die insgesamt neun Schneideinheiten (5 a - i) sind an den Rahmenteilen (2 a - i) in zwei quer zur Fahrtrichtung (8) des Sichelmähwerks (1) im Abstand zueinander verlaufenden Reihen angeordnet. Der Abstand wird bei den als Viereckrahmen ausgestalteten Rahmenteilen (2 b - h) durch die seitlichen Längsholme (18 a, b) bestimmt, wobei die Schneideinheiten (5 a - i) abwechselnd an einem in Fahrtrichtung vorderen bzw. hinteren Holm (19, 20) der Rahmenteile (2 a - i) angelenkt sind. Die Schnittbreite jeder Schneideinheit (5 a - i) ist geringfügig kleiner als die Breite der das Schneidmesser umgebenden Einhausung (9). Die Schneidstreifen benachbarter Schneideinheiten (5 a - i) überlappen sich, um einen Betrag (22), in dem die Schneideinheiten an den vorderen bzw. hinteren Holmen (19, 20) versetzt zueinander angeordnet sind. Mit dem erfindungsgemäßen Sichelmähwerk (1) lassen sich daher in einem Arbeitsgang Rasenflächen in der Breite des gesamten Sichelmähwerks (1) schneiden.

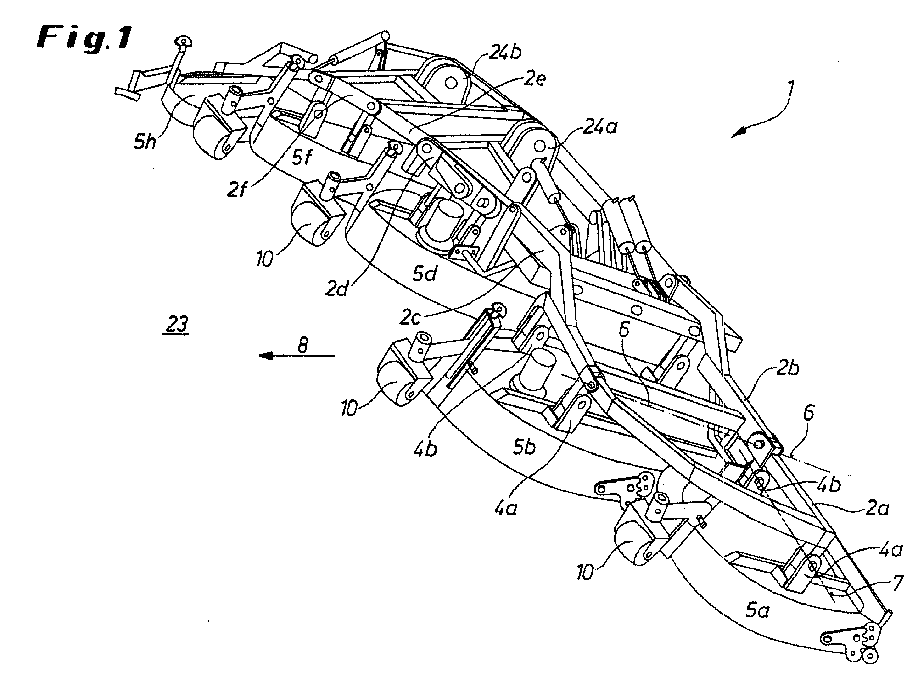

Die Figuren 1 und 4 verdeutlichen, wie sich die aus den Rahmenteilen (2 a - i) gliederartig zusammengesetzte Rahmenkonstruktion der jeweiligen stark ausgeprägten Oberflächentopographie der zu schneidenden Rasenfläche (23) anpasst.

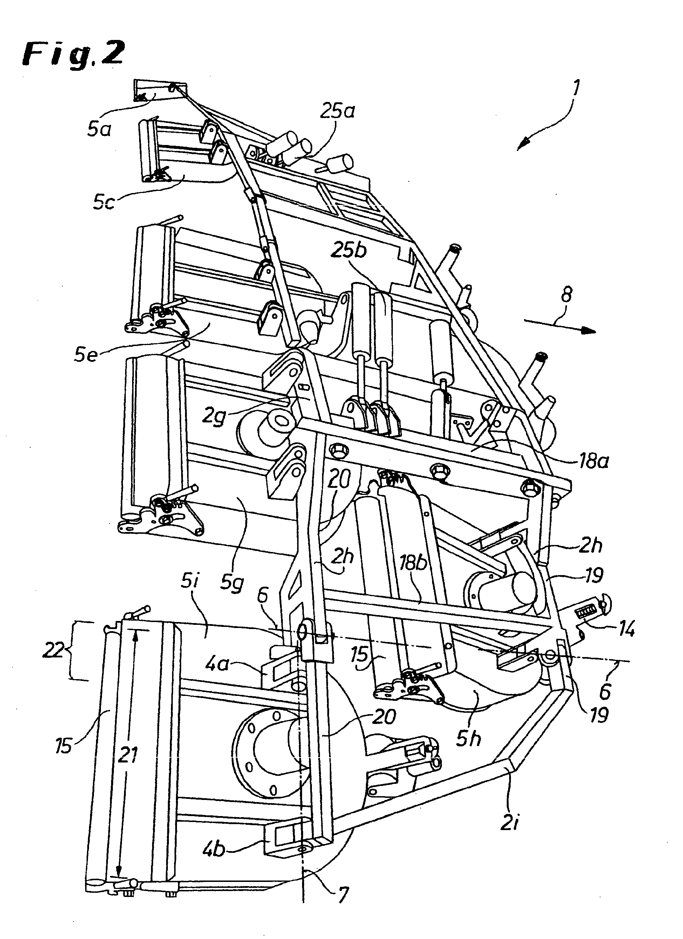

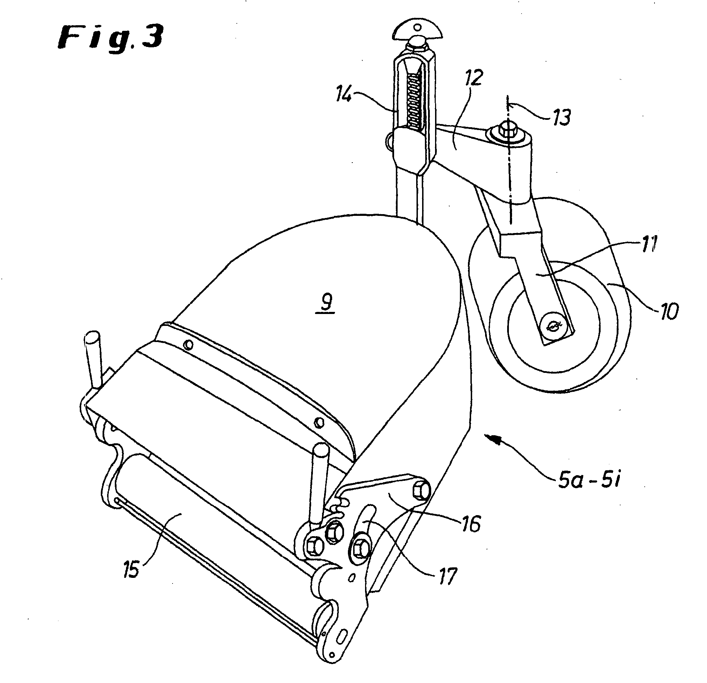

Die Anschlagpunkte (24 a, b) für die in den Figuren 1 bis 4 nicht dargestellten hydraulisch miteinander gekoppelten Tragarme des Geräteträgers (3) sind in Figur 1 erkennbar. Die Lagerungen an den Anschlagpunkten (24 a, b) weisen eine ausreichende seitliche Beweglichkeit auf, um die Abstands- und Winkeländerung zwischen den Rahmenteilen (2 d, 2 f), an denen sich die Anschlagspunkte befinden, zu tolerieren.

Um für einen Straßentransport des Mähwerks (1) die Baubreite zu reduzieren, können die äußeren Rahmenteile (2 a, 2 b, 2c sowie 2 i, 2 h und 2 g) mittels der Hydraulikzylinder (25 a, b) angeklappt werden.

**Bezugszeichenliste**

| **Nr.** | **Bezeichnung** |
|---|---|
| 1 | Sichelmähwerk |
| 2 a - i | Rahmenteile |
| 3 | Geräteträger |
| 4 a, b | Aufnahmen |
| 5 a - i | Schneideinheit |
| 6 | Schwenkachsen |
| 7 | Schwenkachsen |
| 8 | Fahrtrichtung |
| 9 | Einhausung |
| 10 | Stützrolle |
| 11 | Gabel |
| 12 | Arm |
| 13 | vertikale Achse |
| 14 | Höhenverstellung |
| 15 | Stützwalze |
| 16 | Seitenwangen |
| 17 | Kulissenführung |
| 18 a, b | Längsholme |
| 19 | vorderer Holm |
| 20 | hinterer Holm |
| 21 | Schnittbreite |
| 22 | Betrag |
| 23 | Rasenfläche |
| 24 a, | b Anschlagpunkte |
| 25 a, b | Hydraulikzylinder |

## Patentansprüche

1. Sichelmähwerk (1) für einen Kontur-Sichelmäher mit mehreren beweglich aufgehängten Schneideinheiten (5a-5i), wobei das Sichelmähwerk eine Rahmenkonstruktion mit mehreren Rahmenteilen (2a-2i) aufweist und die Rahmenteile über Schwenkachsen (6) gelenkig miteinander verbunden sind, und
die Schwenkachsen (6) zwischen benachbarten Rahmenteilen (2a - 2i), aus denen sich die Rahmenkonstruktion gliederartig zusammensetzt, parallel zur Längsachse des Kontur-Sichelmähers verlaufen und damit parallel zu dessen Fahrtrichtung (8) bei Geradeausfahrt,
**dadurch gekennzeichnet, dass**
- an sämtlichen Rahmenteilen (2a-2i) jeweils mindestens eine Schneideinheit (5a - 5i) um eine Schwenkachsen (7) drehbar angeordnet ist und
- die Schwenkachsen (6) zwischen den Rahmenteilen einerseits und die Schwenkachsen (7) der Schneideinheiten andererseits versetzt zueinander angeordnet sind und
- eine Lagerung jeder Schneideinheit derart an deren Einhausung (9) angeordnet ist, dass ein größerer Teil des Eigengewichts der Schneideinheit (5a - 5i) in Fahrtrichtung (8) des Sichelmähwerks (1) vor der Schwenkachse (7) der Schneideinheit liegt.

2. Sichelmähwerk nach Anspruch 1, **dadurch gekennzeichnet, dass** die Schwenkachsen (6) zwischen den Rahmenteilen und die Schwenkachsen (7) der Schneideinheiten (5a - 5i) um 90 °versetzt zueinander angeordnet sind.

3. Sichelmähwerk nach Anspruch 1 oder 2, **dadurch gekennzeichnet, dass** jede Schneideinheit (5a - 5i) an zwei sich von dem Rahmenteil in Gebrauchstellung des Sichelmähwerks (1) nach unten erstreckenden Aufnahmen (4a,4b)schwenkbar gelagert ist.

4. Sichelmähwerk nach einem der Ansprüche 1 bis 3, **dadurch gekennzeichnet, dass** an jeder Schneideinheit (5a - 5i) in Fahrtrichtung (8) des Sichelmähwerks (1) vor deren Einhausung (9) eine schwenkbare Stützrolle (10) angeordnet ist.

5. Sichelmähwerk nach Anspruch 4, **dadurch gekennzeichnet, dass** an der gegenüberliegenden Seite der Einhausung (9) eine Stützwalze (15) angeordnet ist.

6. Sichelmähwerk nach Anspruch 5, **dadurch gekennzeichnet, dass** sich die Stützwalze (15) im Wesentlichen über die gesamte Breite der Einhausung (9) erstreckt.

7. Sichelmähwerk nach einem der Ansprüche 1 bis 6, **dadurch gekennzeichnet, dass** an den Rahmenteilen (2a -2i) der Rahmenkonstruktion Schneideinheiten (5a - 5i) in mindestens zwei quer zur Fahrtrichtung (8) des Sichelmähers im Abstand zueinander verlaufenden Reihen angeordnet sind.

8. Sichelmähwerk nach Anspruch 7, **dadurch gekennzeichnet, dass** die Schneideinheiten (5a - 5i) in den unterschiedlichen Reihen versetzt zueinander angeordnet sind.

9. Sichelmähwerk nach einem der Ansprüche 1 bis 8, **dadurch gekennzeichnet, dass** zumindest die inneren Rahmenteile (2b - 2h) als Viereckrahmen mit vorderen und hinteren Holmen (19,20) sowie seitlichen Längsholmen (18a,18b) ausgestaltet sind.

10. Kontur-Sichelmäher mit einem angetriebenen Geräteträger (3) und mindestens einem daran angeordneten Sichelmähwerk (1) nach einem oder mehreren der Ansprüche 1 bis 9.

11. Kontur -Sichelmäher nach Anspruch 10, **dadurch gekennzeichnet, dass** ein Sichelmähwerk (1) an zwei Haltearmen an der Vorderseite des Geräteträgers angelenkt ist und /oder an mindestens einer Längsseite des Geräteträgers ein Sichelmähwerk angeordnet ist.

## Claims

1. Sickle mower (1) for a contour lawn mower comprising a plurality of movably suspended cutting units (5a-5i), wherein the contour lawn mower has a frame construction comprising a plurality of frame parts (2a-2i) and the frame parts are connected to one another in an articulated manner via pivot axes (6), and the pivot axes (6) run between adjacent frame parts (2a-2i) from which the frame construction is assembled in an articulated manner, parallel to the longitudinal axis of the contour lawn mower and thus run parallel to the direction of travel thereof (8) when driving straight-ahead, **characterized in that**
- on all the frame parts (2a-2i) in each case at least one cutting unit (5a-5i) is disposed rotatably about a pivot axis (7) and
- the pivot axes (6) are disposed offset to one another between the frame parts on the one hand and the pivot axes (7) of the cutting units on the other hand and
- a mounting of each cutting unit is disposed on the housing (9) thereof in such a manner that a larger part of the intrinsic weight of the cutting unit (5a-5i) lies in the direction of travel (8) of the sickle mower (1) in front of the pivot axis (7) of the cutting unit.

2. The sickle mower according to claim 1, **characterised in that** the pivot axes (6) between the frame parts and the pivot axes (7) of the cutting units (5a-5i) are disposed offset to one another by 90°.

3. The sickle mower according to claim 1 or 2, **characterised in that** each cutting unit (5a-5i) per se is mounted pivotably on two receptacles (4a, 4b) which extend downwards from the frame part in the usage position of the sickle mower (1).

4. The sickle mower according to any one of claims 1 to 3, **characterised in that** a pivotable support roller (10) is disposed on each cutting unit (5a-5i) in the direction of travel (8) of the sickle mower (1) in front of the housing thereof (9).

5. The sickle mower according to claim 4, **characterised in that** a support roller (15) is disposed on the opposite side of the housing (9).

6. The sickle mower according to claim 5, **characterised in that** the support roller (15) extends substantially over the entire width of the housing (9).

7. The sickle mower according to any one of claims 1 to 6, **characterised in that** on the frame parts (2a-2i) of the frame construction, cutting units (5a-5i) are disposed in at least two rows running transversely to the direction of travel (8) of the sickle mower at a distance from one another.

8. The sickle mower according to claim 7, **characterised in that** the cutting units (5a-5i) are disposed offset to one another in the different rows.

9. The sickle mower according to any one of claims 1 to 8, **characterised in that** at least the inner frame parts (2b-2h) are configured as quadrilateral frames having front and rear spars (19, 20) as well as lateral longitudinal spars (18a, 18b).

10. Contour lawn mower having a driven equipment carrier (3) and at least one sickle mower (1) disposed thereon according to one or more of claims 1 to 9.

11. The contour lawn mower according to claim 10 **characterised in that** a sickle mower (1) is articulated to two retaining arms on the front side of the equipment carrier and /or a sickle mower is disposed on at least one longitudinal side of the equipment carrier.

## Revendications

1. Barre de coupe de faucheuse (1) pour une faucheuse contournante avec plusieurs unités de coupe (5a à 5i) accrochées de manière mobile, la barre de coupe comportant une structure en cadre avec plusieurs éléments de cadre (2a à 2i) et les éléments de cadre étant reliés les uns aux autres de manière articulée par l'intermédiaire d'axes pivotants (6) et les actes pivotants (6) s'étendant à la parallèle de l'axe longitudinal de la faucheuse contournante et de ce fait à la parallèle de sa direction de déplacement (8), lors de la marche en avant, entre des éléments de cadre (2a à 2i) voisins qui composent de manière articulée la structure en cadre, **caractérisé**
- **en ce que** sur tous les éléments de cadre (2a à 2i), au moins une unité de coupe (5a à 5i) est chaque fois disposée de manière rotative autour d'un axe de pivotement (7) et
- **en ce que** les axes de pivotement (6) entre les éléments de cadre d'une part et les axes de pivotement (7) des unités de coupe d'autre part sont disposés en étant déportés les uns par rapport aux autres et
- **en ce qu'**un logement de chaque unité de coupe est disposé sur le carter (9) de ces dernières de sorte qu'une plus grande partie du poids propre de l'unité de coupe (5a à 5i) se situe à l'avant de l'axe de pivotement (7) de l'unité de coupe, dans la direction de déplacement (8) de la barre de coupe (1).

2. Barre de coupe de faucheuse selon la revendication 1, **caractérisée en ce que** les axes de pivotement (6)
entre les éléments de cadre et les axes de pivotement (7) des unités de coupe (5a à 5i) sont disposés en étant déportés de 90° les uns par rapport aux autres.

3. Barre de coupe de faucheuse selon la revendication 1 ou la revendication 2, **caractérisée en ce que** chaque unité de coupe (5a à 5i) est logée de manière pivotante sur deux récepteurs (4a, ab) s'étendant vers le bas à partir de l'élément de cadre dans la position d'utilisation de la barre de coupe de faucheuse (1).

4. Barre de coupe de faucheuse selon l'une quelconque des revendications 1 à 3, **caractérisée en ce que** sur chaque unité de coupe (5a à 5i), à l'avant du carter (9) de la barre de coupe pour faucheuse (1), dans la direction de déplacement (8) de cette dernière est disposé un galet d'appui (10) pivotant.

5. Barre de coupe pour faucheuse selon la revendication 4, **caractérisée en ce que** sur le côté opposé du carter (9) est disposé un cylindre d'appui (15).

6. Barre de coupe pour faucheuse selon la revendication 5, **caractérisée en ce que** le cylindre d'appui (15) s'étend sensiblement sur toute la largeur du carter (9).

7. Barre de coupe pour faucheuse selon l'une quelconque des revendications 1 à 6, **caractérisée en ce que** sur les éléments de cadre (2a à 2i) de la structure en cadre, des unités de coupe (5a à 5i) sont disposées en au moins deux rangées s'étendant avec un écart mutuel à la transversale de la direction de déplacement (8) de la faucheuse.

8. Barre de coupe pour faucheuse selon la revendication 7, **caractérisée en ce que** dans les différentes rangées, les unités de coupe (5a à 5i) sans disposées en étant déportées.

9. Barre de coupe pour faucheuse selon l'une quelconque des revendications 1 à 8, **caractérisée en ce qu'**au moins les éléments de cadre (2b à 2h) intérieurs sont conçus en tant que cadres carrés avec des traverses (19, 20) antérieures et postérieures, ainsi qu'avec des longerons (18a, 18b) latéraux.

10. Faucheuse contournante avec un porte-outil (3) entraîné et au moins une barre de coupe pour faucheuse (1) selon l'une quelconque des revendications 1 à 9, disposée sur ce dernier.

11. Faucheuse contournante selon la revendication 10, **caractérisée en ce qu'**une barre de coupe pour faucheuse (1) est articulée sur deux bras de maintien sur la face avant du porte-outil et/ou **en ce qu'**une barre de coupe pour faucheuse est disposées sur au moins un côté longitudinal du porte-engins.
